Europäisches Patentamt

(19) European Patent Office

Office européen des brevets

(11) Publication number : **0 560 609 A1**

# (12) EUROPEAN PATENT APPLICATION

(21) Application number : 93301868.1

(22) Date of filing : 11.03.93

(51) Int. Cl.⁵ : **A23F 5/08,** A23F 5/40,
A23F 5/46

(30) Priority : **12.03.92 US 849842**

(43) Date of publication of application :
**15.09.93 Bulletin 93/37**

(84) Designated Contracting States :
**AT BE CH DE DK ES FR GB GR IE IT LI LU MC
NL PT SE**

(71) Applicant : **KRAFT GENERAL FOODS, INC.
250 North Street
White Plains New York 10625 (US)**

(72) Inventor : **Trumbetas, Jerome Francis
39 Front Street
Tarrytown, New York 10591 (US)**
Inventor : **Loh, Jimbay Peter
221 Buttonwood Avenue
Peekskill, New York 10566 (US)**

(74) Representative : **Eyles, Christopher Thomas
W.P. THOMPSON & CO. High Holborn House
52-54 High Holborn
London WC1V 6RY (GB)**

(54) Colloidal roasted coffee as aromatizer.

(57)    Roasted and ground coffee having a moisture content of less than 5% is micromilled in an edible oil, such as coffee oil, to a particle size of under 20 microns to provide an oily dispersion. The dispersion can be used as an aromatizer for foodstuffs at a level of 0.002 to 4.5%, particularly soluble coffee and roasted and ground coffee. The dispersion is stable, has excellent dispersion qualities, added body, smoothness and a rounded taste, aroma, and flavor comparable to freshly brewed coffee.

EP 0 560 609 A1

Jouve, 18, rue Saint-Denis, 75001 PARIS

## TECHNICAL FIELD

The present invention relates to a coffee flavor and coffee aroma source of micromilled coffee. The product can be used to provide fresh-ground coffee flavor and aroma to coffee and coffee-flavored food products, such as ice cream, candy, chewing gum, fillings and the like. More particularly, the micromilled coffee flavor and aromatizer can be used to increase the coffee flavor and aroma of a soluble coffee beverage and to enhance the flavor and aroma of roasted and ground coffee. The product is stable, has excellent dispersion qualities, added body, smoothness, and a rounded taste and flavor comparable to fresh brewed coffee. Additionally, the invention relates to method of making the stable, micromilled coffee flavor and aromatizer.

## DESCRIPTION OF THE PRIOR ART

It has been recognized by the prior art that finely ground coffee (5 to 20 microns in particle size) can be used to impart the aromatic and flavorful elements of roasted coffee to a soluble coffee beverage by incorporating or admixing 2 to 20%, preferably about 8 to 12% of the finely ground coffee in the soluble coffee. British Patent No. 2,006,503 to Morgan et al. is representative of this art.

The prior art admixtures have the drawback that regardless of how well mixed the products are, they result in poor flowability and poor ease of spooning out. The above patent to Morgan et al. solves these problems by forming an agglomerated coffee. However, the agglomeration still does not solve the problem of the colloidal coffee settling out to form a sediment in the bottom of the coffee cup. While some sediment may be a positive factor for certain applications, it is in most cases a consumer negative.

U.S. Patent No. 4,594,257 to Leblanc et al. while not directed to aromatization shows the addition of 1% to 15% colloidal coffee particles (5 to 25 microns, preferably 10 to 15 microns) to soluble coffee which has been milled to a particle size of 30 to 75 microns. The colloidal coffee helps in forming an improved agglomerated coffee having a roasted and ground appearance.

U.S. Patent No. 4,594,258 to Vitti et al. shows the addition of about 0.01% to 1.0% of coffee oil (instead of colloidal coffee) to produce a similar improved agglomerate.

Still another negative feature of the finely ground coffee particles of the prior art is their stability. The finely ground coffee particles while having a strong aroma and flavor initially, lose this quality very quickly when exposed to ambient conditions. Thus, unless protected from exposure to air, the flavor and aroma qualities of the small particles are lost.

A further negative of the prior art finely ground coffee is that the flavor and arose intensity is such that at least 2%, preferably about 10%, of the coffee must be used to provide a flavor and aroma improvement. Admixtures utilizing amounts less than 2% provide no perceptible improvement.

It is also recognized that if roasted coffee is dry ground (in air), especially in the case of no cooling, accelerated arose loss and degradation are apparent. While wet-milling in water has been used, this has resulted in poor flavor, poor stability and poor dispersion qualities.

Thus, it would be desirable to provide a micromilled coffee which has a stronger flavor and aroma than the prior art finely ground coffees used for this purpose.

It would also be desirable that such micromilled coffee have an increased stability over the prior art products.

Another desirable feature of the micromilled coffee is that it leaves no sediment in the coffee cup when the coffee beverage is consumed.

## SUMMARY OF THE INVENTION

This invention is founded on the discovery that a stable, but potent coffee flavor and coffee aroma can be produced from dry, roasted and ground coffee beans having a moisture content of less than about 5% which are milled in an edible oil to give a particle size of between about 0.1 to about 20 microns in the ground beans.

The whole beans are first roasted and then quenched in a manner which provides a moisture content in the roasted beans of less than about 5% moisture, preferably less than about 4% moisture, and most preferably less than about 2% moisture. The beans are then pre-ground (without addition of moisture) to a coarse particle size of about 100 to 300 microns. The dry ground beans are then slurried with an edible oil, such as coffee oil or vegetable oil, at a level of about 5% to about 10% for the ground coffee and about 95% to about 90% for the oil. The ground coffee is then micromilled in the presence of the oil to reduce the particle size of the coffee to below 20 microns. The microparticles of coffee are dispersed uniformly throughout the oily liquid to give a dispersion which has superior properties over other aromatizers.

These properties include improved suspension stability (no sediment in the bottom of the coffee cup), a smooth mouthfeel and added body to the coffee beverage. The aromatizer has a potent coffee flavor, taste and aroma which is comparable to freshly brewed roasted and ground coffee. Moreover, the flavor and aroma is unusually stable (over three (3) months) when exposed to ambient conditions and does not lose its flavor or aroma qualities due to oxidation. Due to the potency of the aromatizer, effective aromatization of various foodstuffs can be achieved by simply incorporating about 0.002% to about 4.5% of the aromatizer based on the weight of the foodstuff, soluble coffee, or roasted and ground coffee being aromatized. In the case of soluble coffee, about 0.02 to about 3.0% based on the weight of the soluble coffee is suitable. In the case of roasted and ground coffee, about 0.002 to about 1.5% is sufficient. This gives as low as about 0.0014% of roasted coffee aromatizer in the reconstituted instant coffee or brewed coffee beverage (in the cup).

The above process also produces a unique aromatizer which comprises the micromilled particles of roasted coffee at a moisture content of less than about 5% and a particle size of below about 20 microns dispersed in an edible oil.

All percentages (%) recited in this specification and claims are by weight.

## DETAILED DESCRIPTION OF THE INVENTION

Whole coffee beans, preferably Colombians or other good quality coffee beans are first subjected to a conventional roasting operation. The roasting operation is then terminated by a quenching operation which either avoid the use of water or subsequently removes any water in the beans which would give a moisture content of above 5%. Preferably, the moisture content should be kept under about 2-4% and as close to 0% as possible. The roasted beans are then subjected to a coarse pre-grind. This may be accomplished by a conventional dry grind techniques known in the coffee art or by grinding roasted coffee in oil using a colloid or a tooth mill. This will give a coarse particle size of about 100 to 300 microns.

According to the present invention, an edible oil is then added to the dry, ground roasted coffee to form a slurry of the oil and roasted ground coffee beans. The oil may be any suitable oil or lipid material capable of forming a coating or "encapsulating" the roasted ground coffee during the micro-milling step. The amount of oil added will vary somewhat depending on the nature of the oil. Coffee oil is the preferred oil for this invention but any vegetable oil which is stable to oxidative degradation can be used. Corn oil, olive oil, coconut oil and palm kernel oil are suitable. Typically, about 30% of the selected oil is added to about 70% of ground, dry coffee in forming the oil-coffee slurry. However, as little as about 30%, and as much as about 95%, of the oil can be used in forming a suitable slurry for wet-milling.

The oil slurry which can contain from about 5% to about 70% of the dry roasted and ground coffee can then be wet-milled in appropriate wet milling apparatus such as a Dyno-Mill wet grinder. The Dyno-Mill is manufactured by Willy A. Bachofen AG and can be obtained in the United States through Glen Mills Inc., 203 Brookdale Street, Maywood, New Jersey 07607. The Dyno-Mill grinds the slurry of ground roasted coffee in oil to an extremely fine particle size. The finely ground particles are dispersed within the oil to give a homogenous paste. The slurry to be processed is pumped through a horizontal chamber containing ceramic (zirconium oxide) beads at 1.7 to 2.0 mm. Of course, glass or steel beads can also be used. An agitation shaft with rotor discs moves the beads at great speed impacting them millions of times against the process solids. The impact forces generated by this action reduce the ground roasted coffee to between about 0.1 and about 20 microns with 75 to 80% of the coffee between about 2 and about 10 microns. This creates a uniform dispersion of the small particles in the oily paste. The oily dispersion or paste is discharged continuously while the beads are retained in the Dyno Mill by a "dynamic separator" which forms an adjustable gap that holds the ceramic beads in the machine while allowing the oil dispersion to exit.

The dispersion is characterized by the following particle size distribution for the roasted coffee microparticles which are dispersed in the dispersion.

| Microns | % By Weight |
|---------|-------------|
| <2 | 5-25% |
| <10 | 80-95% |
| >10<20 | 5-20% |

Typically, less than 20% of the particles are between 10 and 20 microns, less than 25% are between 0.1 and 2 microns, and at least 75% are between 2 and 10 microns.

While the above particle size distribution is effective to give the desired aromatization results of this invention, it is preferred that 100% of the coffee particles be reduced to a size of between about 0.1 and about 10 microns, and preferably between about 0.1 and about 5 microns. An average particle size of between about 2 microns to about 10 microns is very suitable for achieving the results of this invention. The smaller the size of the coffee particles, the more potent the coffee aroma and the coffee flavor.

As indicated, the aromatizer of this invention is very potent and while a broad range of from about 0.002% to about 4.5% by weight based on the weight of the foodstuff is operative, it has been found that as little as about 0.002% to 1.5% of the aromatizer is sufficient to give the desired flavor and aroma improvement to the foodstuff. In the case of soluble coffee, the range is about 0.02% to 3.0%, with about 0.08% to 1.8% preferred. In the case of roasted and ground coffee, the range is about 0.002 to 1.5%, with about 0.1% to 0.6% preferred.

This invention will now be described by reference to several examples which will show preferred embodiments and their advantage over the prior art.

EXAMPLE 1

Aromatised Soluble Coffee

Columbian coffee beans were roasted and then quenched in air to give a moisture content in the roasted beans of less than 2% moisture. The dry roasted beans were then pre-ground to give a coarse particle size of about 100 microns.

The dry roasted and ground coffee was mixed with coffee oil to form the following slurries (% by weight):

| Ex. | A | B | C | D | E | F |
|---|---|---|---|---|---|---|
| ground coffee | 5% | 30% | 50% | 60% | 70% | 80% |
| coffee oil | 95% | 70% | 50% | 40% | 30% | 20% |
| TOTAL | 100% | 100% | 100% | 100% | 100% | 100% |

Each slurry was thoroughly blended to form a dispersion of the coffee in the coffee oil. The dispersion was then ground in a "Dyno-Mill" KDL wet-mill grinder available from Glen Mills Inc. of 203 Brookdale Strett, Maywood, New Jersey 07607. The dispersion of ground roasted coffee was pumped through a horizontal grinding chamber filled to 85% capacity with ceramic (zirconium dioxide) beads. Inside the grinding chamber, a rapid rotating shaft (4500 rpm) fitted with specially designed discs drove the beads to rotate at an even more rapid rate. The high impact force of millions of beads pulverized the coffee into micromilled particles which were discharged through a gap or opening in a separator for the beads. The grinding was done at low pressure (0 to 10 psig [1.01 to 1.70 bar]) and at 50°to 60°C. Temperatures above 70°C result in flavor degradation and burnt off-flavor notes. A uniform, smooth micromilled dispersion having an average mean particle size of between 2 and 10 microns was produced by the Dyno-Mill. Analysis of the coffee particles showed a distribution between 0.1 to 20 microns.

All of the above slurries gave effective dispersions of ground coffee in oil. However, at the 80% ground coffee level (Ex. F), the dispersion had an exceedingly high viscosity and the temperatures during grinding was difficult to control. Ex. C, D, and E (50%, 60% and 70% ground coffee) gave the optimum dispersions.

The dispersion of micromilled coffee of Example B above was incorporated into a soluble coffee powder at the following levels (by weight):

| A | B | C | D | E | F |
|---|---|---|---|---|---|
| 0.1% | 0.3% | 0.5% | 0.9% | 1.5% | 3.0% |

The above samples were premixed at the measured amounts of paste with about 1/3 of the total soluble coffee powder to be aromatized. The admixture was blended in a Hobart mixer at speed 1 to form a free-flowing, yet slightly cohesive powder. The balance (2/3) of soluble coffee powder was then added and the admixture blended for an additional minute to give a homogenous aromatized soluble coffee.

A hot coffee beverage was made from each of the five samples by dispersing 1 gm of the aromatized coffee powder in 99 gms of hot (90°C) water while stirring the beverage.

All of the above samples gave a detectable improvement in the flavor and aroma of the hot coffee beverage. Depending on the individual preference, the aromatizer level between 0.3% to 0.5% was most preferred. At this level, the coffee had added body, more smoothness and more of a rounded taste and flavor of freshly brewed coffee. At the 1.5% and 3.0% level, the flavor and aroma were exceedingly strong. The 0.9% level gave an acceptable flavor and aroma impact. This was also true in the case of 0.1% level; a perceptible flavor and aroma improvement was readily detectable although weaker than the 0.3% to 0.9% level.

EXAMPLE 2

Negative Result

A coarse grind of roasted Columbian coffee beans similar to Ex. 1, (except for having a moisture content of about 7%) was slurried in water (instead of oil) in the following % by weight:

| Ex. | A | B | C | D | E | F |
|---|---|---|---|---|---|---|
| ground coffee | 5% | 10% | 15% | 30% | 40% | 70% |
| water | 95% | 90% | 85% | 70% | 60% | 30% |
| TOTAL | 100% | 100% | 100% | 100% | 100% | 100% |

Each slurry was thoroughly blended to form a dispersion of the coffee in the water. The watery dispersion was then ground in a "Dyno-Mill" following a procedure similar to that of Ex. 1. All samples, except Sample A, failed due to high viscosity. Milling or size reduction efficiency was poor due to development of a rubbery, thick, viscous texture of hydrated roasted coffee. The Sample A product which was successfully micromilled to the Ex. 1 particle size was placed in storage at 10°C. A tobacco-like off-odor was noted within two days of storage. This compared very unfavorably with the Ex. 1 product which could be stored at 10°C for over six (6) months without developing any off-notes or loss of coffee flavor and aroma.

Efforts to mix the aqueous dispersion of Sample A while still stable (within 24 hours of storage at 10°C) failed due to formation of large lumps in the Hobart mixer. The lumps became as hard as rock candy making any homogeneous mix impossible.

Comparison of the Sample A aqueous dispersion with the oily dispersion of Ex. 1 showed the oily dispersion to be far superior in potency of aroma and flavor to the aqueous dispersion of Sample A.

EXAMPLE 3

Aromatized Roasted and Ground Coffee

The Sample C of Example 1 oil dispersion of micromilled coffee (50% roasted coffee and 50% coffee oil) was admixed at the 0.1% and 0.14% level in roasted and ground Columbian coffee to test the applicability of the aromatizer to brewed coffee. The coffee was then brewed and compared to a control with no aromatizer added. All tasters indicated that the aromatized brewed coffee was different, had a stronger flavor and aroma intensity characterized by a woody note (similar to brewed Colombian coffee).

EXAMPLE 4

Aromatized " Postum™"

The Sample C of Example 1 dispersion was incorporated in Postum™ (a roasted wheat grain beverage powder) at the 1.1% level based on the total weight of the Postum™ powder. A hot Postum™ beverage was made by dispersing 1 gm of the aromatized Postum™ in 99 gm of hot (99°C) water while stirring the beverage. All tasters indicated a dramatic improvement in the flavor and taste of the Postum™ beverage in the direction of a more coffee-like flavor and aroma. Moreover, the aromatized Postum™ dispersed better than the unaromatized Postum™.

As is self evident and as emerges from the foregoing, this invention is in no way limited to the specific examples and embodiments which have been more particularly described; but encompasses, on the contrary all modifications of the appended claims.

**Claims**

1. A process for making a stable coffee flavor and aroma source from roasted coffee beans which comprises:

making a slurry of dry roasted and ground beans with an edible oil, said slurry containing about 5% to about 70% ground roasted coffee and about 95% to about 30% of edible oil, said roasted and ground coffee having a moisture content less than about 5%; and

milling the ground roasted coffee in the presence of said oil to a particle size of between about 0.1 to about 20 microns to thereby form a stable dispersion of said coffee in said oil.

2. A process according to claim 1, wherein the edible oil is a coffee oil.

3. A process according to claim 1, wherein the edible oil is vegetable oil.

4. A process according to any one of claims 1 to 3, wherein the dry roasted and ground coffee has a moisture content of less than 2% and the coffee particles are milled to a particle size of between about 0.1 to about 10 microns.

5. A process according to any one of claims 1 to 4, wherein the coffee particles are milled to an average particle size of about 2 to about 10 microns.

6. A process according to any one of claims 1 to 5, wherein the coffee particles are milled to a particle size of between about 0.1 to about 5 microns.

7. A process according to any one of claims 1 to 6, wherein the slurry comprises from about 50% to about 70% ground coffee beans and from about 50% to about 30% coffee oil.

8. A process for imparting to a foodstuff an enhanced coffee flavor and aroma which comprises incorporating in the foodstuff a dispersion of micromilled coffee oil produced by a process according to any one of claims 1 to 7.

9. A process according to claim 8, wherein the foodstuff is soluble coffee powder and the dispersion is admixed with soluble coffee powder at a level of about 0.02% to about 3.0% based on the total weight of the soluble coffee.

10. A process according to claim 9, wherein the dispersion is admixed with the soluble coffee powder at a level of about 0.08% to about 1.8% by weight of the soluble coffee.

11. A process according to claim 8, wherein the foodstuff is roasted and ground coffee and the dispersion is admixed with roasted and ground coffee at a level of about 0.002% to about 1.5% by weight of the roasted and ground coffee.

12. A process according to claim 11, wherein the dispersion is admixed with roasted and ground coffee at a level of about 0.02% to about 1.3% by weight of the roasted and ground coffee.

13. A process according to claim 11, wherein the dispersion is admixed with roasted and ground coffee at a level of about 0.013% to about 0.60% by weight of the roasted and ground coffee.

14. A stable coffee flavor and aromatizer comprising a dispersion of about 5% to about 70% of dry roasted micromilled coffee in about 95% to about 30% of an edible oil, said micromilled coffee having a moisture content of less than about 5% and a particle size of between about 0.1 to about 20 microns.

15. A coffee aromatizer according to claim 14, wherein the moisture content of the micromilled coffee is less than about 2% and the particle size of the micromilled coffee is about 0.1 to about 10 microns.

16. A coffee aromatizer according to claim 14 or claim 15, wherein the average particle size of the micromilled coffee is between about 2 and 10 microns.

17. A coffee aromatizer according to claim 14 or claim 15, wherein the particle size of the micromilled coffee is about 0.1 to about 5 microns.

18. A coffee aromatizer according to any one of claims 14 to 17, wherein the edible oil is coffee oil.

19. A foodstuff containing from about 0.02 to about 4.5% of a coffee aromatizer according to any one of claims 14 to 18.

20. A soluble coffee powder containing from about 0.02 to about 3% of a coffee aromatizer of any one of claims 14 to 18.

21. A roasted and ground coffee containing from about 0.08% to about 1.8% of a coffee aromatizer according to any one of claims 14 to 18.

## EUROPEAN SEARCH REPORT

| | | |
|---|---|---|
| European Patent Office | EUROPEAN SEARCH REPORT | Application Number |
| | | EP 93 30 1868 |

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 557 294 (J. KELLOG)<br><br>* column 2, line 55 - column 3, line 2; claims 1-5; examples 2,3,4 *<br>* column 4, line 1 - line 6 *<br>--- | 1-10,<br>14-20 | A23F5/08<br>A23F5/40<br>A23F5/46 |
| X | DATABASE WPIL<br>Section Ch, Week 8247,<br>Derwent Publications Ltd., London, GB;<br>Class D13, AN 82-00760J<br>& JP-A-57 166 938 (H. MORIO)<br>* abstract *<br>--- | 1,3,7,8,<br>14,19 | |
| A | US-A-1 716 323 (T. RECTOR)<br>* column 1, line 15 - line 49; claims 1-7 *<br>--- | 1-6 | |
| A,D | US-A-4 594 257 (Y. LEBLANC ET AL.)<br><br>* column 3, line 61 - line 68; claims 1,16-18 *<br>--- | 1--5,<br>8-10 | |
| A | US-A-3 697 288 (J. MCSWIGGIN)<br>* column 4, line 64 - line 71; claim 1; example *<br>--- | 1,4-6 | TECHNICAL FIELDS SEARCHED (Int. Cl.5)<br><br>A23F |
| A | FR-A-1 566 489 (OTTANIA ETABLISSEMENT)<br><br>* examples 1,2,3 *<br><br>----- | 1,4-6,<br>14-17 | |

The present search report has been drawn up for all claims

| Place of search | Date of completion of the search | Examiner |
|---|---|---|
| THE HAGUE | 28 MAY 1993 | DESMEDT G.R.A. |